# EUROPEAN PATENT APPLICATION

(11) **EP 2 634 731 A2**
(43) Date of publication of application: **04.09.2013**
(21) Application number: 13151137.0
(22) Date of filing: 14.01.2013
(51) Int. Cl.: G06K 19/00

(54) **Re-printable RFID hard tags**

(30) Priority: 12.01.2012 US 201261585740 P
(71) Applicant: R.F Keeper Ltd, 48092 Rosh Ha'ain (IL)
(72) Inventor: Raz, Shimi, 42842 Bat Hefer (IL)
(74) Representative: Lecomte & Partners

(57) **Abstract**

The present invention provides:
A re-printable RFID hard tag for transferring stored data, comprising:
a. a RFID tag; and
b. a re-printable surface layer;

wherein said surface layer is adapted for reprinting by erasable ink.

## Description

### FIELD OF INVENTION

The present invention relates to radio-frequency identification (RFID) devices, systems and methods including RFID tags in a reusable manner. The invention also relates to combination of barcodes with RFID tags and electronic article surveillance (EAS) tags.

### BACKGROUND

Barcodes have become a ubiquitous element of the retail market and helps tracking items. They are useful in cash registers and data collection devices so as to avoid typing long numbers. In order to scan the barcode bar-code scanners are used the scanners are built from a fixed light and a single photo-sensor that is manually "scrubbed" across the barcode. The techniques of bar-coding today arise variety of problems such as, labels with barcodes can be damaged or folded easily. Another problem is that limited amount of data can be store in a bar-code label.

Another technology known for storing data is RFID (Radio-frequency identification). RFID is a technology that uses radio waves to transfer data from an electronic tag or label, attached to an object, through a reader for the purpose of identifying and tracking the object. Some RFID tags can be read from several meters away and beyond the line of sight of the reader. The application of bulk reading enables an almost-parallel reading of many tags. The tag's information is stored electronically. The RFID tag includes a small RF transmitter and receiver. An RFID reader transmits an encoded radio signal to interrogate the tag. The tag receives the message and responds with its identification information. Passive RFID tags or labels do not use a battery. Instead, the tag uses the radio energy transmitted by the reader as its energy source. The RFID system design includes a method of discriminating several tags that might be within the range of the RFID reader.

RFID systems are installed in the retail and logistics markets. This includes Apparel, Drug, Discount, Home Centers, Hypermarkets, Food, Entertainment, and Specialty stores.

US Published Patent Application No. 2008100452 describes an optically identifiable radio frequency identification (RFID) tag devices. The RFID tag is incorporated in the inside of a bar code sheet, the position of the RFID tag can be easily specified,

US Published Patent Application No. 2007158436 discloses a RFID tag which is interposed between two sheets constituting the bar code sheet. The RFID tag can be easily incorporated in the inside of the bar code sheet.

US Published Patent Application No. 20070008138 discloses a system for identifying and tracking persons and articles having a coordinated relationship to one another by using dual bar code and RFID reader technologies.

Application No. WO06031824 discloses method for recycling wireless tags, such as RFID tags and wireless sensors, and the containers they may be attached to. An RFID tag or wireless sensor system is described that leaves RFID tags and wireless sensors undamaged and capable of reuse through numerous cycles.

There is therefore a long unmet need for improved RFID tags which will function in the retail environment in order to improve the visibility of items and merchandise across the supply chain, methods and devices.

### SUMMARY

This invention seeks to provide an associating process and device of RFID tag to object which includes a writing information including but not limited to barcode, onto RFID tag. This invention further seeks to provide a RFID tag having a writing - information in printing manner which can be later edited or deleted.

There is provided in accordance with a preferred embodiment of the present invention, a re-printable RFID hard tag for transferring stored data, comprising: (a)a RFID tag; and (b)a re-printable surface layer, wherein the surface layer is adapted for reprinting by erasable ink.

There is provided in accordance with a preferred embodiment of the present invention a re-printable RFID hard tag for transferring stored data, comprising a plurality of layers, wherein at least one layer comprises written information in an erasable ink ,at least a second layer is a re-printable surface supporting or comprising the erasable ink layer, and at least third layer is a RFID hard tag supporting or comprising the re-printable surface.

There is provided in accordance with a preferred embodiment of the present invention a re-printable RFID hard tag for transferring stored data, comprising layers: (a)a written information in an erasable ink; (b)a re-printable surface; and (c)a RFID hard tag, wherein the re-printable surface comprises the erasable ink layer.

There is further provided in accordance with a preferred embodiment of the present invention a re-printable RFID hard tag which further comprising at least one EAS layer as a fourth layer

There is further provided in accordance with a preferred embodiment of the present invention, the re-printable RFID hard tag as defined above, wherein the re-printable RFID hard tag is adapted to receive printing information in automatic identification technology (Auto ID) onto the re-printable surface layer.

There is further provided in accordance with a preferred embodiment of the present invention, the re-printable RFID hard tag as defined above, wherein the printing information is been performed in a manner that the information can be edited or erased from the RFID re-printable surface.

There is further provided in accordance with a preferred embodiment of the present invention, the re-printable RFID hard tag as defined above, wherein the RFID tag layer can be applied onto the electronic artificial surveillance (EAS) layer.

There is further provided in accordance with a preferred embodiment of the present invention, the re-printable RFID hard tag as defined above, wherein the RFID hard tag further comprises the re-printable surface.

There is further provided in accordance with a preferred embodiment of the present invention, the re-printable RFID hard tag as defined above, wherein the re-printable surface is a removable layer.

There is further provided in accordance with a preferred embodiment of the present invention, the re-printable RFID hard tag as defined above, wherein the re-printable surface is a single use sticker.

There is further provided in accordance with a preferred embodiment of the present invention, the re-printable RFID hard tag as defined above, wherein the re-printable RFID hard tag is adapted such that information can be edited or erased from the RFID re-printable surface.

There is further provided in accordance with a preferred embodiment of the present invention, the re-printable RFID hard tag as defined above, wherein the EAS layer comprises the RFID tag.

There is further provided in accordance with a preferred embodiment of the present invention, the re-printable RFID hard tag as defined above, wherein the EAS layer is selected from a group consisting of: EAS acousto-magnetic layer, RF, combination of EAS acousto-magnetic and RF layers any combination thereof.

There is further provided in accordance with a preferred embodiment of the present invention, the re-printable RFID hard tag as defined above, wherein the EAS layer comprises any conventional EAS technology.

There is further provided in accordance with a preferred embodiment of the present invention, the re-printable RFID hard tag as defined above, wherein the EAS layer is readable by EAS detectors.

There is further provided in accordance with a preferred embodiment of the present invention, the re-printable RFID hard tag as defined above, wherein the RFID tag includes any conventional EAS technology component, a RF transmitter and receiver.

There is further provided in accordance with a preferred embodiment of the present invention, the re-printable RFID hard tag as defined above, further wherein the RFID layer can perform an EAS type function.

There is further provided in accordance with a preferred embodiment of the present invention, the re-printable RFID hard tag as defined above, wherein the information is a written information selected from the group consisting of: barcode, price, size, brand, or any other combination thereof.

There is further provided in accordance with a preferred embodiment of the present invention, the re-printable RFID hard tag as defined above, wherein the information is a written information comprises any conventional data of the article.

There is further provided in accordance with a preferred embodiment of the present invention, the re-printable RFID hard tag as defined above, wherein the barcode signifying a corresponding is in a one or two-dimensional pattern for encoded data of the article.

There is further provided in accordance with a preferred embodiment of the present invention, the re-printable RFID hard tag as defined above, wherein the barcode comprises any conventionally produced barcode.

There is further provided in accordance with a preferred embodiment of the present invention, the re-printable RFID hard tag as defined above, wherein the information is erased by exposing the re-printable surface to at least one selected from a group consisting of: light, powder deposit, chemicals, gas, liquid or any other ink erasing substances, or scratch-able system.

There is further provided in accordance with a preferred embodiment of the present invention, the re-printable RFID hard tag as defined above, wherein the plurality of layers are adapted such that, printing and erasing a first written information image on the printing surface and replacing the first written information image by forming a second the written information image on the surface may be iterated in a substantially unlimited manner.

There is further provided in accordance with a preferred embodiment of the present invention, the re-printable RFID hard tag as defined above, wherein the automatic identification technology stores real time data and identification data of the article.

There is further provided in accordance with a preferred embodiment of the present invention, the re-printable RFID hard tag as defined above, wherein erasing the erasable ink is been performed by the technique selected from the group consisting of: light, chemical material, gas, liquid or any combination thereof.

There is further provided in accordance with a preferred embodiment of the present invention, the re-printable RFID hard tag as defined above, wherein the re-printable RFID hard tag is comprises at least one plastic film.

There is further provided in accordance with a preferred embodiment of the present invention, the re-printable RFID hard tag as defined above, wherein the RFID tag consists of an integrated circuit such as microchip for storing and processing information, modulating and demodulating a radio-frequency identification (RFID) signal, and other specialized functions attached to a radio antenna for receiving and transmitting the signal mounted on a substrate.

There is provided in accordance with a preferred embodiment of the present invention, a RFID printing system for providing a re-printable RFID tag, the system comprising: (a)A RFID tag comprising re-printable surface, (b)a RFID printer; and (c)an erasable ink, wherein the RFID tag comprising re-printable surface is adapted for re-printing by erasable ink.

There is further provided in accordance with a preferred embodiment of the present invention, the RFID tag system as defined above, wherein further comprising an eraser as a part of the printer.

There is further provided in accordance with a preferred embodiment of the present invention, the RFID tag system as defined above, wherein further comprising an eraser as a standalone device.

There is further provided in accordance with a preferred embodiment of the present invention, the RFID tag system as defined above, wherein further comprising at least one EAS layer as another layer.

There is further provided in accordance with a preferred embodiment of the present invention, the RFID tag system as defined above, wherein the EAS is selected from the group consisting of: EAS acousto-magnetic, radio frequency (RF), or combination of EAS acousto-magnetic and RF.

There is further provided in accordance with a preferred embodiment of the present invention, the RFID tag system as defined above, further wherein the RFID layer can perform an EAS type function.

There is further provided in accordance with a preferred embodiment of the present invention, the RFID tag system as defined above, wherein the EAS layer comprises any conventional EAS technology component.

There is further provided in accordance with a preferred embodiment of the present invention, the RFID tag system as defined above, wherein the RFID tag layer can be applied onto the electronic artificial surveillance (EAS) layer;

There is further provided in accordance with a preferred embodiment of the present invention, the RFID tag system as defined above, wherein further comprising RFID interrogator as a part of the printer or standalone device.

There is further provided in accordance with a preferred embodiment of the present invention, the RFID tag system as defined above, wherein the RFID interrogator is adapted for burning the re-printable information into RFID tag.

There is provided in accordance with a preferred embodiment of the present invention, a method of re-printing erasable ink onto a RFID hard tag comprising the steps of: (a) providing an erasable ink and a RFID tag comprising an erasable surface,
(b)printing information on a re-printable surface with the erasable ink, and(c) forming a RFID hard tag with erasable printed information, wherein the printing information has been performed in a manner that the information can be edited or erased from the RFID re-printable surface.

There is further provided in accordance with a preferred embodiment of the present invention, the method as defined above, wherein the re-printable RFID hard tag is adapted to receive printing information in automatic identification technology (Auto ID) onto the re-printable surface layer.

There is further provided in accordance with a preferred embodiment of the present invention, the method as defined above, wherein further comprising steps of attaching the re-printable surface to RFID tag by the manner selected from a group consisting of: gluing, welding, grafting, assembling, mounting or any combination thereof.

There is further provided in accordance with a preferred embodiment of the present invention, the method as defined above, wherein the re-printable surface is a removable layer.

There is further provided in accordance with a preferred embodiment of the present invention, the method as defined above, wherein the re-printable surface is a single use sticker.

There is further provided in accordance with a preferred embodiment of the present invention, the method as defined above, wherein further comprising steps of erasing the re-printed information.

There is further provided in accordance with a preferred embodiment of the present invention, the method as defined above, further comprising steps of rewriting a different erasable information on the re-printable surface.

There is further provided in accordance with a preferred embodiment of the present invention, the method as defined above, wherein adapting the re-printable RFID hard tag such that information can be edited or erased from the RFID re-printable surface.

There is further provided in accordance with a preferred embodiment of the present invention, the method as defined above, wherein further comprising at least one electronic artificial surveillance (EAS) layer as a forth layer.

There is further provided in accordance with a preferred embodiment of the present invention, the method as defined above, wherein the EAS layer comprises the RFID hard tag.

There is further provided in accordance with a preferred embodiment of the present invention, the method as defined above, wherein the RFID tag layer can be applied onto the electronic artificial surveillance (EAS) layer;

There is further provided in accordance with a preferred embodiment of the present invention, the method as defined above, wherein the EAS layer is selected from a group consisting of: EAS acousto-magnetic layer, RF, combination of EAS acousto-magnetic and RF layers or any combination thereof.

There is further provided in accordance with a preferred embodiment of the present invention, the method as defined above, wherein the EAS layer comprises any conventional EAS technology.

There is further provided in accordance with a preferred embodiment of the present invention, the method as defined above, wherein the EAS layer is provided in order to support EAS detectors.

There is further provided in accordance with a preferred embodiment of the present invention, the method as defined above, wherein the RFID tag includes any conventional EAS technology, a RF transmitter and a receiver.

There is further provided in accordance with a preferred embodiment of the present invention, the method as defined above, further wherein the RFID layer can perform an EAS type function.

There is further provided in accordance with a preferred embodiment of the present invention, the method as defined above, wherein the information is a written information selected from the group consisting of: barcode, price, size, brand, or any other combination thereof.

There is further provided in accordance with a preferred embodiment of the present invention, the method as defined above, wherein the information is a written information comprises any conventional data of the article.

There is further provided in accordance with a preferred embodiment of the present invention, the method as defined above, wherein the barcode is in a one or two-dimensional pattern for encoded data of the article which is mounted to.

There is further provided in accordance with a preferred embodiment of the present invention, the method as defined above, wherein the barcode comprises any conventionally produced barcode.

There is further provided in accordance with a preferred embodiment of the present invention, the method as defined above, wherein the information is erased by exposing the re-printable surface to at least one selected from a group consisting of: light, chemicals, gas, liquid or any other ink erasing substances.

There is further provided in accordance with a preferred embodiment of the present invention, the method as defined above, wherein the written information is with the ability to be printed and erased without limitation such that, erasing the written information image on the printing surface and forming another the written information image the surface.

There is further provided in accordance with a preferred embodiment of the present invention, the method as defined above, wherein the automatic identification technology stores real time data and identification data of the article.

There is further provided in accordance with a preferred embodiment of the present invention, the method as defined above, wherein the erasing the erasable ink is been performed by the technique selected from the group consisting of: light, chemical material, gas, liquid or any combination thereof.

There is further provided in accordance with a preferred embodiment of the present invention, the method as defined above, wherein the RFID tag consists of a integrated circuit such as microchip for storing and processing information, modulating and demodulating a radio-frequency identification (RFID) signal, and other specialized functions attached to a radio antenna for receiving and transmitting the signal mounted on a substrate.

### BRIEF DESCRIPTION

In order to understand the invention and to see how it may be implemented in practice, a few preferred embodiments will now be described, by way of non-limiting example only, with reference to be accompanying drawings, in which:
**Fig. 1** illustrates a re-printable RFID hard tag device, in accordance with a preferred embodiment of the present invention; and
**Fig. 2** illustrates the layer structure of the re-printable RFID hard tag, in accordance with a preferred embodiment of the present invention; and
**Fig. 3** shows a flow chart of a method procedure of the re-printable RFID hard tag forming, in accordance with a preferred embodiment of the present invention; and
**Fig. 4** shows a flow chart of a method procedure of the re-printable RFID hard tag forming, in accordance with a preferred embodiment of the present invention.

### DETAILED DESCRIPTION

The following description is provided so as to enable any person skilled in the art to make use of the invention and sets forth the best modes contemplated by the inventor of carrying out this invention. Various modifications, however, will remain apparent to those skilled in the art, since the generic principles of the present invention have been defined specifically to provide device, method and system for re-printable RFID hard tags. The invention described herein enables a process for associating tags to objects and a unique encryption method which enables storing in a secured manner supply chain information.

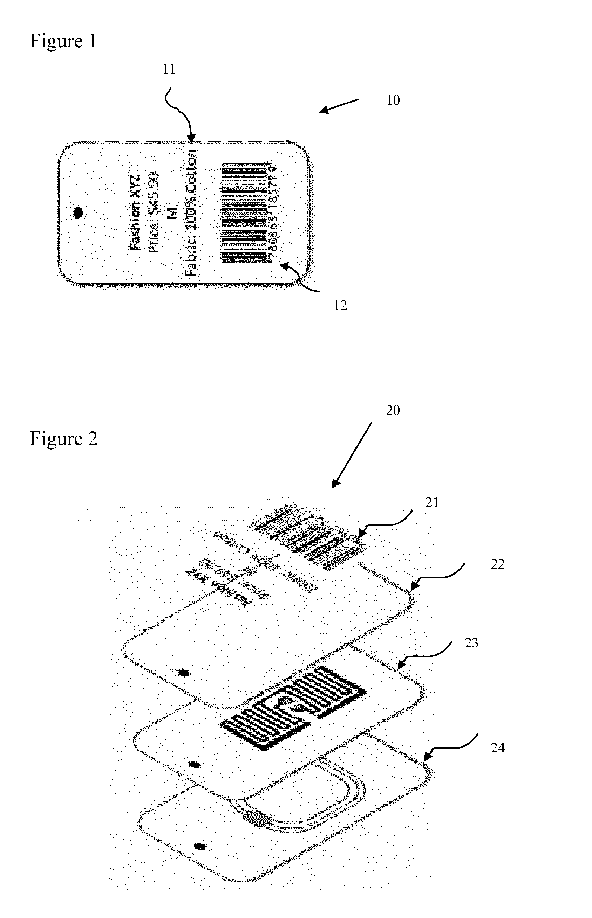

Reference is now made to Fig. 1, which illustrates a re-printable RFID hard tag 10, in accordance with a preferred embodiment of the present invention. The re-printable RFID hard tag includes the printed information on a typical RFID tag 12. The re-printable RFID hard tag is adapted to receive written information 11 in automatic identification technology (Auto ID) onto the re-printable surface layer. The automatic identification technology stores real time data and identification data of the article to which the re-printable RFID hard tag 23 is attached ..

The written information 11 can be a barcode, price, size, brand, or any other information for identification of the article which the tag is mounted to. The barcode 13 is in one or two-dimensional pattern for encoded data of the article or garment to which the re-printable RFID hard tag is attached.

Automatic Identification and Data Capture (AIDC) refers to the methods of automatically identifying objects, collecting data about them, and entering that data directly into computer systems (i.e. without human involvement). Technologies typically considered as part of AIDC include bar codes, Radio Frequency Identification (RFID), biometrics, magnetic stripes, Optical Character Recognition (OCR), smart cards, and voice recognition. AIDC is also commonly referred to as "Automatic Identification," "Auto-ID," and "Automatic Data Capture. "AIDC is the process or means of obtaining external data, particularly through analysis of images, sounds or videos. To capture data, a transducer is employed which converts the actual image or a sound into a digital file. The file is then stored and at a later time it can be analyzed by a computer, or compared with other files in a database to verify identity or to provide authorization to enter a secured system. Capturing of data can be done in various ways; the best method depends on application. AIDC also refers to the methods of recognizing objects, getting information about them and entering that data or feeding it directly into computer systems without any human involvement. Automatic identification and data capture technologies include barcodes, RFID, bokodes, OCR, magnetic stripes, smart cards and biometrics (like iris and facial recognition system). In biometric security systems, capture is the acquisition of or the process of acquiring and identifying characteristics such as finger image, palm image, facial image, iris print or voice print which involves audio data and the rest all involves video data. Radio frequency identification (RFID) is another AIDC technology. The technology acts as a base in automated data collection, identification and analysis systems worldwide.. The automated wireless AIDC systems are effective in manufacturing environments where barcode labels could not survive.

Reference is now made to Fig. 2, which illustrates the variety of layer of the re-printable RFID hard tag, in accordance with a preferred embodiment of the present invention. The re-printable RFID hard tag 20 comprises written information 21 in an erasable ink, a re-printable surface 22, and a RFID hard tag 23.

The written information 21 as illustrated is the upper layer is printed on a re-printable RFID tag surface. The information has been printed by an erasable ink in a manner such that the information can be edited or erased from the RFID hard tag re-printable surface 22. The information can be erased by exposing the re-printable surface 22 to at least one selected from a group consisting of: light, chemicals, gas, liquid or any other ink erasing substances which is known in the art. The written information is with the ability to be printed and erased without limitation such that, erasing the written information image 21 on the re-printing surface 22 and forming another written information image on the re-printable surface. The re-printable surface can be an integral part of the RFID tag 23 or a separate layer which can be removed and can be replaced with a different layer when the tag is reprinted. These layers can be in the form of any removable or peelable sticker.

In accordance with the preferred embodiment of the present invention, the RFID tag 23 which comprises the re-printable surface 22 is a typical RFID tag which includes an EAS technology component, a RF transmitter and receiver. The RFID tag is a hard tag therefore it is made of plastic, polymer type or any other rigid substance. The RFID tag consists of a integrated circuit such as microchip for storing and processing information, modulating and demodulating a radio-frequency (RF) signal, and other specialized functions attached to a radio antenna for receiving and transmitting the signal mounted on a substrate. The RFID tag further comprises an antenna which is attached to the chip in order to receive and transmit its data. The substrate can be a paper or plastic film or housing that the chip and antenna are mounted on. The RFID tag for storing data includes, inter alia, data storage devices, such as a passive RF identification tag, which stores item data therein. Typical item data include, inter alia, item data such as, a cost of the item, an item quality factor, item identification data, manufacturer identification data, item barcode, item serial number, SKU (stock-keeping unit) number and the item sales promotion notification and any combination of these data.

In accordance with the preferred embodiment of the present invention, the re-printable RFID hard tag 23 can further comprise at least one electronic artificial surveillance (EAS) layer 24. In another embodiment of the invention, the EAS layer 23 can be an additional layer attached to the RFID layer 23. In another embodiment of the invention, the RFID layer will comprise the EAS as an integral part. In another embodiment the RFID layer can perform an EAS type function. In another embodiment of the invention the re-printable RFID hard tag 23 is attached to a garment for EAS purposes using attaching methods such as : pins, wiring, sewing, pressure, heat or by any method known in the art.

Most retail stores have an EAS system for shoplifting protection and rely on bar code technology for inventory control. On the other hand RFID offers faster and more detailed inventory control over the bar code. Combining RFID technology to EAS hard tag as re-usable tag could easily pay for the added cost due to improved productivity in inventory control as well as enhanced loss prevention. The EAS is known in the art as a system that protects merchandise from theft. An EAS system has three components; (1) labels and hard tags electronic sensors that are attached to merchandise; (2) deactivators and detachers used at the point of sale to electronically deactivate labels and detach reusable hard tags as items are purchased; and (3) detectors that create a surveillance zone at exits or checkout aisles. The EAS systems operate from a simple principle regardless of the manufacturer or the specific type of technology used: a transmitter sends a signal at defined frequencies to a receiver. This creates a surveillance area, usually at a checkout aisle or an exit in the case of retail stores. Upon entering the area, a tag or label with special characteristics creates a disturbance, which is detected by the receiver. The exact means by which the tag or label disrupts the signal is a distinctive part of different EAS systems. For example, tags or labels may alter the signal by using a simple semi-conductor junction (the basic building block of an integrated circuit), a tuned circuit composed of an inductor and capacitor, soft magnetic strips or wires, or vibrating resonators.

There are several major types of electronic article surveillance: Magnetic also known as magneto-harmonic, acousto-magnetic also known as magnetostrictive, radio frequency, microwave and video surveillance systems. Magnetic tags are made of a strip of amorphous metal, which has a very low magnetic saturation value. Except for permanent tags, this strip is also lined with a strip of ferromagnetic material with a moderate coercive field (magnetic "hardness"). Detection is achieved by sensing harmonics and sum or difference signals generated by the non-linear magnetic response of the material under a mixture of low-frequency magnetic fields.

Acousto-magnetic tags are similar to magnetic tags in that they are made of two strips, a strip of magnetostrictive, ferromagnetic amorphous metal and a strip of a magnetically semi-hard metallic strip, which is used as a biasing magnet (to increase signal strength) and to allow deactivation. These strips are not bound together but free to oscillate mechanically.

Radio frequency tags are essentially an LC tank circuit that has a resonance peak anywhere from 1.75 MHz to 9.5 MHz. The most popular frequency is 8.2 MHz. Sensing is achieved by sweeping around the resonant frequency and detecting the dip.

Microwave systems permanent tags are made of a non-linear element (a diode) coupled to one microwave and one electrostatic antenna. At the exit, one antenna emits a low-frequency (about 100 kHz) field, and another one emits a microwave field. The tag acts as a mixer reemitting a combination of signals from both fields. This modulated signal triggers the alarm.

Acousto-magnetic EAS tag can be used as the optional EAS layer of the invention. Acousto-magnetic systems use a transmitter to create a surveillance area where tags and labels are detected. The transmitter sends a radio frequency signal in pulses. The transmitted signal energizes a tag in the surveillance zone. When the transmitted signal pulse ends, the tag responds, emitting a single frequency signal like a tuning fork. The tag signal is at about the same frequency as the transmitter signal. While the transmitter is off between pulses, the tag signal is detected by a receiver. A microcomputer checks the tag signal detected by the receiver to ensure it is at the right frequency, occurs in time synchronized to the transmitter, at the proper level, and at the correct repetition rate. If the criterion is met, an alarm occurs.

In accordance with the preferred embodiment of the present invention, the EAS layer 24 of the present invention can be an EAS acousto-magnetic layer, a RF (radio frequency), or combination of EAS acousto-magnetic and RF layers. The EAS layer includes any conventional EAS technology. The EAS layer is readable by EAS detectors.

In another embodiment of the invention the re-printable RFID hard tag 23 is attached to a garment for EAS purposes using attaching methods such as : pins, wiring, sewing, pressure, heat or by any method known in the art

In accordance with the preferred embodiment of the present invention, the present invention further includes a system for providing a re-printable RFID tag, the system comprises: A RFID tag comprising re-printable surface, a RFID printer and an erasable ink.The RFID printer can print on the re-printable surface the product marking such as brand, size, price, barcodes and any other information of the product. The printer comprises the erasable ink for printing the relevant information.

In accordance with the preferred embodiment of the present invention, the system further comprises an eraser as a part of the printer or as a standalone device. The eraser is adapted for erasing the written information from the re-printable surface based on one of the techniques for erasing ink from the reprintable surface such as light, chemicals, gas, liquid or any other ink erasing substances which is known in the art. Removal of the written information can be by any scrubbing or peeling methods. The eraser is fitted to the specific erasable ink printed on the hard tag.

In accordance with the preferred embodiment of the present invention, the system may further comprise an EAS layer which is attached to the RFID tag. The EAS layer can also be an integral part of the RFID tag layer such that the system will include any conventional EAS technology inside the RFID tag layer In another embodiment the RFID layer can perform an EAS type function.

In accordance with the preferred embodiment of the present invention, the system further comprises RFID interrogator as a part of the printer or as a standalone device. The written information equivalent or a subset of it is burned into the RFID tag using RFID interrogator resides inside the printer or nearby the printer.

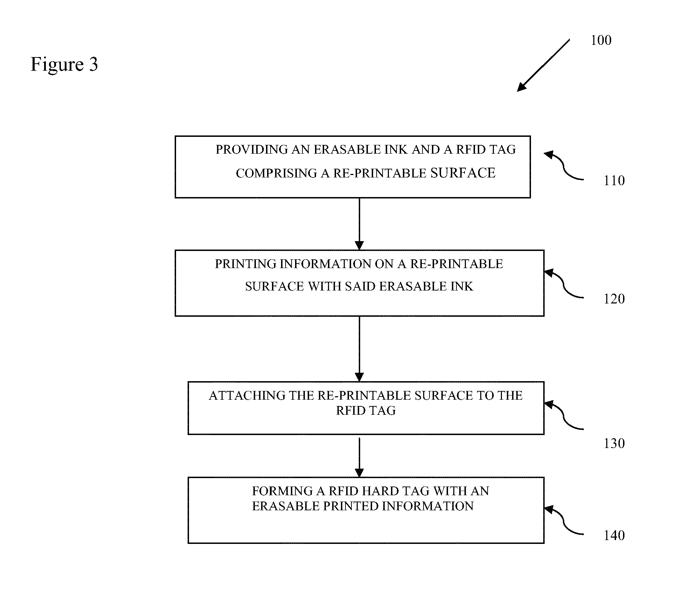

Reference is now made to Fig. 3, which illustrates a flow chart of the method procedure of the re-printable RFID hard tag. The method of re-printing erasable ink onto a RFID hard tag comprises the steps of: (a) providing an erasable ink and a RFID tag comprising an erasable surface (110),(b) printing information on a re-printable surface with the erasable ink (120),(c) attaching the re-printable surface to the RFID tag (130), and(d) forming a RFID hard tag with an erasable printed information (140).

In another embodiment of the invention in step 110, an erasable ink is provided which can be erased by variety of techniques such as: light, chemicals, gas, liquid or any other ink erasing substances known in the art. Furthermore an RFID tag with a re-printable surface is provided.

In another embodiment of the invention, in step 120 the printed information in the form of a barcode, price, size, brand , or any other information related to the article to which the re-printable RFID hard tag is attached, is performed in a manner that the information can be edited or erased from the RFID re-printable surface.

In another embodiment of the invention, printing of information is performed by any method known in the art. In order to print bar code labels, a label format is created with software that supports bar coding. To print bar codes, the application software supports bar coding or additional programming will be required. After the label or form is designed, it needs to be output on a printer that is capable of producing bar codes and supports the specific symbology that is used. A common laser and ink jet printers are set up for producing bar codes or can make use of a special printing head that will apply a unique erasable ink. They can also be upgraded with additional fonts or programming to support the bar coding printing. There are two basic thermal barcode printing methods: the first one is a thermal transfer barcode printing. In thermal transfer barcode printing method, the print head transfers ink from a ribbon into a layer. The second method which is been used is thermal direct barcode printing, the print head is in direct contact with treated paper, and no ribbon is used. As a result, consumable costs are smaller, but the print head undergoes substantially more wear and tear. There is a coating on the label media that turns black as heat is applied to it. Because of this, no ribbon is required. The thermal barcode label printer is driven by a proprietary programming language, which can make the bar code printing process challenging. However, bar code label software makes it easier by allowing to create labels on the screen and print barcode labels with data from various sources.

In accordance with the preferred embodiment of the present invention, the method further comprises the step 130 of attaching the re-printable surface to RFID tag which can be performed by the manner selected from a group consisting of: gluing, welding, grafting, assembling, mounting or any combination thereof. The re-printable surface is a separate layer of the RFID tag which can be removed and can be replaced with a different layer when the tag is reprinted.

In another embodiment of the invention in step 140, the re-printable RFID hard tag is formed, comprising its re-printable surface having written information in an erasable ink.

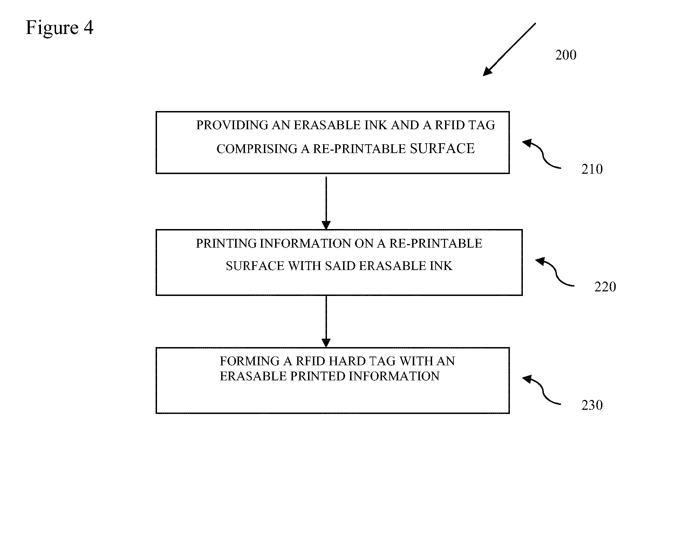

Reference is now made to Fig. 4, which illustrates a flow chart of the method procedure of the re-printable RFID hard tag. The method of re-printing erasable ink onto a RFID hard tag comprises the steps of: (a) providing an erasable ink and a RFID tag comprising an erasable surface (210),(b) printing information on a re-printable surface with the erasable ink (220), and (d) forming a RFID hard tag with an erasable printed information (230).

In another embodiment of the invention in step 210, an erasable ink is provided which can be erased by variety of techniques such as: light, chemicals, gas, liquid or any other ink erasing substances known in the art. Furthermore an RFID tag with a re-printable surface is provided.

In another embodiment of the invention in step 220 the printed information in the form of a barcode, price, size, brand, or any other information related to the article is performed in a manner that the information can be edited or erased from the RFID re-printable surface. In order to print bar code labels, a label format is created with software that supports bar coding. To print bar codes, the application software supports bar coding or additional programming will be required. After the label or form is designed, it needs to be output on a printer that is capable of producing bar codes and supports the specific symbology that is used. A common laser and ink jet printers are set up for producing bar codes. They can also be upgraded with additional fonts or programming to support the bar coding printing. There are two basic thermal barcode printing methods: the first one is a thermal transfer barcode printing. In thermal transfer barcode printing method, the print head transfers ink from a ribbon into a layer. The second method which is been used is thermal direct barcode printing, the print head is in direct contact with treated paper, and no ribbon is used. As a result, consumable costs are smaller, but the print head undergoes substantially more wear and tear. There is a coating on the label media that turns black as heat is applied to it. Because of this, no ribbon is required. The thermal barcode label printer is driven by a proprietary programming language, which can make the bar code printing process challenging. However, bar code label software makes it easier by allowing to create labels on the screen and print barcode labels with data from various sources

In another embodiment of the invention in the presented method 200 the re-printable surface is a reusable layer surface and it is an integral part of the RFID tag. The re-printable surface can be used as a multiuse surface for printing, erasing and reprinting data. The RFID tag layer can be applied onto or can be replaced by the electronic artificial surveillance (EAS) layer as a forth layer or as a third layer, instead of RFID tag therefore the RFID tag layer can be applied onto or can be replaced by the electronic artificial surveillance (EAS) layer.

In another embodiment of the invention attaching the re-printable RFID hard tag 23 to a garment for EAS purposes is performed by using attaching methods such as : pins, wiring, sewing, pressure, heat or by any method known in the art

In another embodiment of the invention in step 230, the re-printable RFID hard tag is formed, comprising its re-printable surface having written information in an erasable ink.

In accordance with the preferred embodiment of the present invention, after forming the re-printable RFID hard tag in order to edit or change the written information the method further comprises the step of erasing the re-printed information for the surface of rewriting a different erasable information on the re-printable surface by the aforementioned techniques.

In accordance with the preferred embodiment of the present invention, the method further comprises adapting at least one electronic artificial surveillance (EAS) layer. The EAS layer can be attached to the RFID tag as a one unit for alerting and storing data.

In the foregoing description, embodiments of the invention, including preferred embodiments, have been presented for the purpose of illustration and description. They are not intended to be exhaustive or to limit the invention to the precise form disclosed. Obvious modifications or variations are possible in light of the above teachings. The embodiments were chosen and described to provide the best illustration of the principals of the invention and its practical application, and to enable one of ordinary skill in the art to utilize the invention in various embodiments and with various modifications as are suited to the particular use contemplated. All such modifications and variations are within the scope of the invention as determined by the appended claims when interpreted in accordance with the breadth they are fairly, legally, and equitably entitled.

## Claims

1. A re-printable RFID hard tag for transferring stored data, comprising:
a. a RFID tag; and
b. a re-printable surface layer;
wherein said surface layer is adapted for reprinting by erasable ink.

2. A re-printable RFID hard tag for transferring stored data, comprising a plurality of layers, wherein at least one layer comprises written information in an erasable ink ,at least a second layer is a re-printable surface supporting or comprising said erasable ink layer, and at least third layer is a RFID hard tag supporting or comprising said re-printable surface.

3. A re-printable RFID hard tag for transferring stored data, comprising layers:
a. a written information in an erasable ink;
b. a re-printable surface; and
c. a RFID hard tag;
wherein said re-printable surface comprises said erasable ink layer.

4. The re-printable RFID hard tag according to claims 1-3, further comprising at least one EAS layer as a fourth layer.

5. The re-printable RFID hard tag according to claim 1, wherein at least one of the following is being held true (a) said re-printable RFID hard tag is adapted to receive printing information in automatic identification technology (Auto ID) onto said re-printable surface layer; (b) said printing information is been performed in a manner that said information can be edited or erased from said RFID re-printable surface; (c) said RFID tag layer can be applied onto said electronic artificial surveillance (EAS) layer; (d) said RFID hard tag further comprises said re-printable surface; (e) said RFID tag layer can be applied onto said electronic artificial surveillance (EAS) layer; (f) said re-printable surface is either (i) a removable layer; or (ii) a single use sticker; and any combination thereof; further wherein said automatic identification technology stores real time data and identification data of the article.

6. The re-printable RFID hard tag according to claims 1, wherein at least one of the following is being held true (a) said EAS layer is selected from a group consisting of: EAS acousto-magnetic layer, RF, combination of EAS acousto-magnetic and RF layers any combination thereof; (b) said EAS layer is readable by EAS detectors; (c) said RFID tag includes any conventional EAS technology component, a RF transmitter and receiver; (d) the RFID layer can perform an EAS type function; or wherein said barcode signifying a corresponding is in a one or two-dimensional pattern for encoded data of said article; (e) said re-printable RFID hard tag is adapted such that information can be edited or erased from said RFID re-printable surface; (f) said EAS layer comprises either (i) said RFID tag; or, (ii) any conventional EAS technology.

7. The re-printable RFID hard tag according to claim 1, wherein said information is either (a) a written information selected from the group consisting of: barcode, price, size, brand, or any other combination thereof; or, (b) a written information comprises any conventional data of said article; or wherein said barcode comprises any conventionally produced barcode.

8. The re-printable RFID hard tag according to claim 1, wherein at least one of the following is being held true (a) said information is erased by exposing the re-printable surface to at least one selected from a group consisting of: light, powder deposit, chemicals, gas, liquid or any other ink erasing substances, or scratch-able system; (b) said plurality of layers are adapted such that, printing and erasing a first written information image on said printing surface and replacing said first written information image by forming a second said written information image on said surface may be iterated in a substantially unlimited manner; (c) said RFID tag consists of an integrated circuit such as microchip for storing and processing information, modulating and demodulating a radio-frequency identification (RFID) signal, and other specialized functions attached to a radio antenna for receiving and transmitting the signal mounted on a substrate; (d) said re-printable RFID hard tag is comprises at least one plastic film; (e) erasing said erasable ink is been performed by the technique selected from the group consisting of: light, chemical material, gas, liquid or any combination thereof; and any combination thereof.

9. A RFID printing system for providing a re-printable RFID tag, the system comprising:
a. A RFID tag comprising re-printable surface;
b. a RFID printer; and
c. an erasable ink;
wherein said RFID tag conforms to any claims 1 to 8.

10. The RFID tag system according to claim 9, wherein further comprising at least one selected from a group consisting of (a) an eraser as a part of said printer; (b) an eraser as a standalone device; (c) at least one EAS layer as another layer; wherein said EAS is selected from the group consisting of: EAS acousto-magnetic, radio frequency (RF), or combination of EAS acousto-magnetic and RF; (d) the RFID layer can perform an EAS type function; (e) said RFID tag system comprising RFID interrogator as a part of said printer or standalone device; or wherein said RFID interrogator is adapted for burning said re-printable information into RFID tag; (f) said EAS layer comprises any conventional EAS technology component; and any combination thereof.

11. A method of re-printing erasable ink onto a RFID hard tag comprising the steps of:
a) providing an erasable ink and a RFID tag comprising an erasable surface ;
b) printing information on a re-printable surface with said erasable ink; and
c) Forming a RFID hard tag with erasable printed information;
wherein said printing information has been performed in a manner that said information can be edited or erased from said RFID re-printable surface.

12. The method according to claim 11, wherein at least one of the following is being held true (a) said re-printable RFID hard tag is adapted to receive printing information in automatic identification technology (Auto ID) onto said re-printable surface layer; (b) said re-printable surface is a either (i) a removable layer; or, (ii) a single use sticker; (c) said information is erased by exposing the re-printable surface to at least one selected from a group consisting of: light, chemicals, gas, liquid or any other ink erasing substances; (d) said written information is with the ability to be printed and erased without limitation such that, erasing said written information image on the said printing surface and forming another said written information image said surface; (e) said automatic identification technology stores real time data and identification data of the article; (f) said RFID tag consists of a integrated circuit such as microchip for storing and processing information, modulating and demodulating a radio-frequency identification (RFID) signal, and other specialized functions attached to a radio antenna for receiving and transmitting the signal mounted on a substrate.

13. The method according to claim 11, wherein further comprising steps of (a) attaching said re-printable surface to RFID tag by the manner selected from a group consisting of: gluing, welding, grafting, assembling, mounting or any combination thereof; (b) erasing said re-printed information; or wherein said erasing said erasable ink is been performed by the technique selected from the group consisting of: light, chemical material, gas, liquid or any combination thereof; (c) rewriting a different erasable information on said re-printable surface; and any combination thereof.

14. The method according to claim 11, wherein at least one of the following is being held true (a) adapting said re-printable RFID hard tag such that information can be edited or erased from said RFID re-printable surface; (b) said EAS layer is provided in order to support EAS detectors; (c) said RFID tag includes any conventional EAS technology, a RF transmitter and a receiver; (d) the RFID layer can perform an EAS type function; (e) said RFID tag layer can be applied onto said electronic artificial surveillance (EAS) layer; (f) said information is either (i) a written information selected from the group consisting of: barcode, price, size, brand, or any other combination thereof; (ii) a written information comprises any conventional data of said article; and any combination thereof; further wherein (i) said barcode is in a one or two-dimensional pattern for encoded data of the article which is mounted to; (ii) said barcode comprises any conventionally produced barcode.

15. The method according to claim 11, wherein further comprising at least one electronic artificial surveillance (EAS) layer as a forth layer; or, said EAS layer comprises said RFID hard tag; or, said EAS layer is selected from a group consisting of: EAS acousto-magnetic layer, RF, combination of EAS acousto-magnetic and RF layers or any combination thereof; or, said EAS layer comprises any conventional EAS technology.
